# EUROPEAN PATENT SPECIFICATION

(11) **EP 2 842 867 B1**
(45) Date of publication and mention of the grant of the patent: **29.03.2017**
(21) Application number: 13382340.1
(22) Date of filing: 30.08.2013
(51) Int. Cl.: B64C 3/18, B64C 9/00

(54) **Composite control surfaces for aircraft**
Steuerflächen aus Verbundmaterial für Flugzeuge
Surfaces de contrôle en matériau composite pour avion

(43) Date of publication of application: 04.03.2015
(73) Proprietor: Airbus Operations S.L., 28906 Getafe, Madrid (ES)
(72) Inventor: Guinaldo Fernández, Enrique, 28906 Getafe (ES); García Nieto, Carlos, 28906 Getafe (ES); Honorato Ruiz, Francisco Javier, 28906 Getafe (ES); Cruz Domínguez, Francisco José, 28906 Getafe (ES)
(74) Representative: Elzaburu S.L.P.

(56) References cited:
- DE-A1- 3 726 909
- DE-A1-102005 038 857
- DE-C1- 3 515 323

## Description

### FIELD OF THE INVENTION

This invention refers to composite control surfaces for aircraft, and more in particular to the control surfaces placed in the horizontal stabilizers (elevators) and in the vertical stabilizers (rudders). The invention may also be applicable to other mobile surfaces, such as flaps or ailerons.

### BACKGROUND OF THE INVENTION

Elevators are the control surfaces placed in the horizontal stabilizers (HTP), and placed on both sides of the HTP they control the pitch of the aircraft. Rudders are directional control surfaces placed in the vertical stabilizers (VTP).

Nowadays, and particularly in the aeronautical industry, composite materials with an organic matrix and continuous fibres, especially CFRP (Carbon Fibre Reinforced Plastic) are widely used in a great variety of structural elements.

Elevators are mainly multirib structures with at least a main spar. The Boeing 727 elevators are constructed using honeycomb sandwich panels with CFRP facesheets for surface panels and four ribs. In this case, the use of sandwich covers allows elimination of most ribs; the ribs have honeycomb webs while the spars are made of monolithic laminates.

Another example of these structures is the rudder of the McDonnell-Douglas DC-10, which is a full CFRP two-spar multi-rib construction with monolithic skins.

In the Boeing 767 rudder, the cover panels were split for manufacturing reasons. In this case, the basic design is a two spar multi-rib box using honeycomb sandwich ribs and spars and cover panels. The outboard aileron of the Boeing 767 presents a design where there is a full-depth honeycomb construction.

The elevator of Airbus A320 comprises an upper skin and a lower skin made of honeycomb sandwich panels. This elevator includes only two inner ribs and two additional ribs closing the elevator on the sides.

DE 3726909 A1 discloses lateral-flow bodies, such as wings, empennages or a control surface according to the preamble of claim 1, having a substructure consisting of corrugated spar webs, which form a V-shape with respect to one another, and connecting flanges connecting them, the surface coverings and the substructure consisting of fibre-composite materials.

DE 3515323 C1, referred to "Wing and tail surfaces structure for aircraft" discloses supporting member for aircraft wing and tail units, having a substructure which is formed from spar webs extending towards each other in the shape of a V, and which comprises an integral, plastically deformed metal sheet for fixing the skin of the member, wherein the integral sheet member forming the substructure is deformed superplastically, and such that the metal sheet forming the substructure forms any desired number of spar webs extending towards each other in the shape of a V, which webs at the same time extend in a corrugated form in their depth.

One important drawback of control surfaces (elevators and rudders) with honeycomb sandwich constructions is that this kind of construction absorbs water and its weight increases with time. Another drawback of that kind of structure is the high maintenance and operational costs.

### SUMMARY OF THE INVENTION

The object of the present invention is to provide a composite control surface for aircraft able to overcome the above-mentioned drawbacks.

The invention provides a composite control surface for aircraft comprising a monolithic upper skin, a monolithic lower skin and an inner structure between them, all these elements being made of composite material, wherein the inner structure has a corrugated shape, comprising side members acting as spars and lower and upper members, the lower and upper members contacting the inner surfaces of the lower skin and the upper skin respectively, and wherein the inner structure additionally comprises a front spar as an integral part of said inner structure.

This configuration of the composite control surface with a corrugated inner structure provides an improved structural performance.

Another advantage of the invention with respect to the prior art standard configurations with stiffened monolithic skins is that it allows to reduce the weight of the control surface, without losing structural performance.

Another advantage of the invention is that it is easier to repair and manufacture, as it contains a reduced number of parts.

Moreover, the invention relates, on the other hand, to a method for manufacturing a composite control surface for aircraft as described, comprising the following steps:
- the upper skin and the lower skin are laminated using ATL ("Automated Tape Lying") or AFP ("Automated Fibre Placement"),
- the corrugated inner structure is produced using ATL or AFP and a press-forming process,
- the upper skin, the lower skin and the corrugated inner structure are assembled, the lower and upper members of the corrugated inner structure being in contact with the inner face of the lower and upper skins, respectively, and
- the respective interfaces between the upper and lower skins and the upper and lower members are co-cured, co-bonded and/or riveted.

Other characteristics and advantages of the present invention will be clear from the following detailed description of several embodiments illustrative of its object in relation to the attached figures.

### BRIEF DESCRIPTION OF DRAWINGS

Figure 1 shows a perspective view of a composite control surface for aircraft, which does not form part of the invention.
Figure 2 represents the composite control surface of figure 1, showing the inner structure of same.
Figure 3 represents the composite control surface of figure 1 without the upper skin.
Figure 4 represents another perspective view of the composite control surface of figure 1 without the upper skin.
Figure 5 represents a plan view of figure 4.
Figures 6 and 7 represent perspective views of the composite control surface of figure 1 without the upper skin.
Figure 8 represents a frontal perspective view of the composite control surface of figure 1.
Figures 9 and 10 show schematic views of several configurations of a composite control surface for aircraft, which do not form part of the invention.
Figure 11 shows a schematic view of a composite control surface for aircraft of the invention.
Figure 12 shows the composite control surface of figure 9 with a rib.
Figure 13 shows the composite control surface of figure 11 with the inner structure reaching the rear end of the control surface.
Figure 14 shows a perspective view without the upper skin of an alternative control surface, which does not form part of the invention.

### DETAILED DESCRIPTION OF THE INVENTION

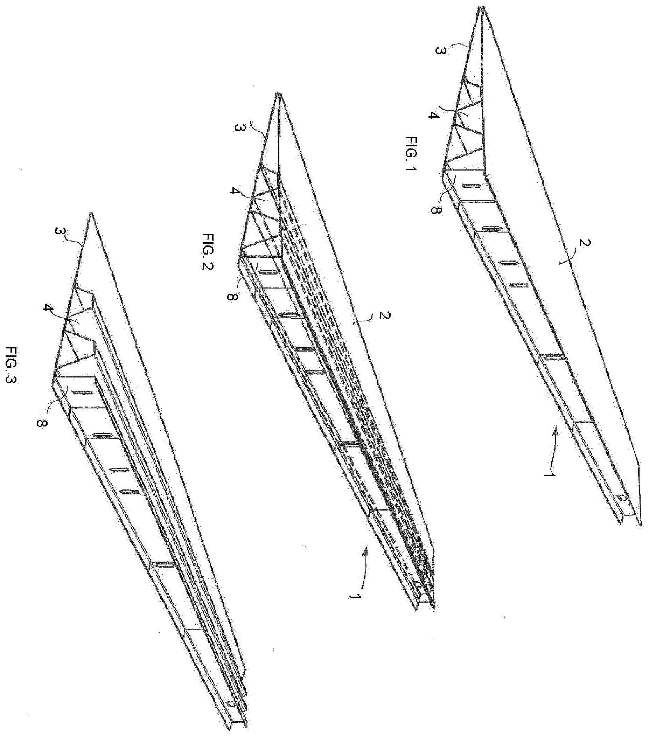

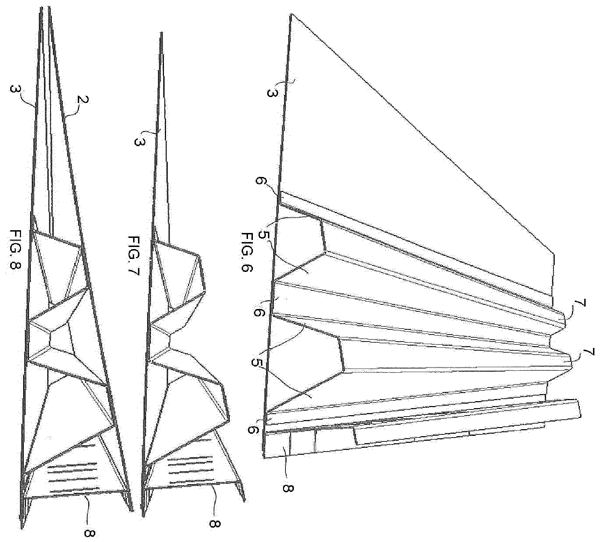

Figures 1 to 9 show a configuration of a composite control surface 1 for aircraft.

It is to be taken into account that in the present document the relative terms "front" and "rear" have their usual meaning in this field, i.e., a "front" position points or is closer to the cabin of the aircraft and a "rear" position points or is closer to its tail.

As it can be seen in these figures, the control surface 1 basically comprises a monolithic upper skin 2, a monolithic lower skin 3 and an inner structure 4 between them. All these elements are made of composite materials.

Monolithic skins are easier to repair and present better maintenance and operational costs than traditional honeycomb skins.

In figures 3 to 7 the upper skin 2 is not shown to facilitate the identification of the different internal parts.

The inner structure 4 has a corrugated shape. It comprises side members 5 acting as spars, and lower 6 and upper 7 members in the interfaces with the upper 2 and lower 3 skins, respectively, in contact with the respective skins when assembled. According to one embodiment of the invention, at least one of the side members 5 is planar, and the front side member 5 of the corrugated inner structure 4 can work as the traditional front spar in a conventional control surface.

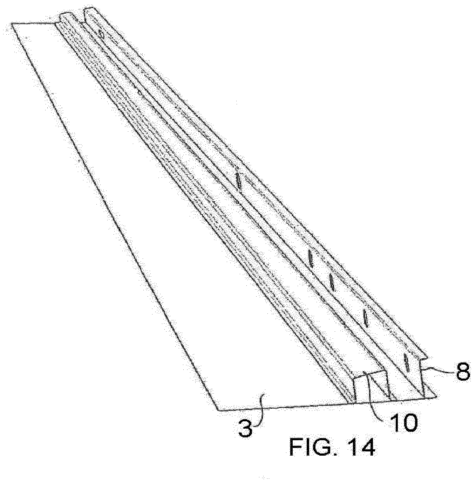

In its most simplified version (see figure 14), the corrugated shape of the inner structure 4 includes only one omega-shaped element 10, comprising two side members 5, an upper member 7 in the interface with the upper skin 2, and two lower members 6 in the interface with the lower skin 3.

According to another embodiment of the invention, at least one of the side members 5 is sloped with respect to the lower members 6 (in figs. 1 to 13, all of the side members 5 are sloped with respect to the lower members 6.

According to another embodiment of the invention, at least one of the side members 5 is vertical with respect to the lower members 6 (see fig. 14).

According to another embodiment of the invention, the inner structure comprises 4 four side members 5 which are vertical with respect to the lower members 6 (i.e., the inner structure 4 would be formed by two continuous omega-shaped elements with vertical side members 5).

The amount of intermediate side members 5 depends on the size of the control surface 1 and the loads and specific requirements it must withstand. The areas of the corrugated inner structure 4 that are in contact with the lower skin 3 and the upper skin 2 (lower 6 and upper 7 members, respectively) must show compliance with standard reparability processes, so they must be wide enough to allow riveting operations. The width of these lower 6 and upper 7 members also depends on the slope of the side members 5 and the load to transfer.

The slope of the intermediate side members 5 is such that it must allow easy repairing and manufacturing, as well as the capability to transfer loads.

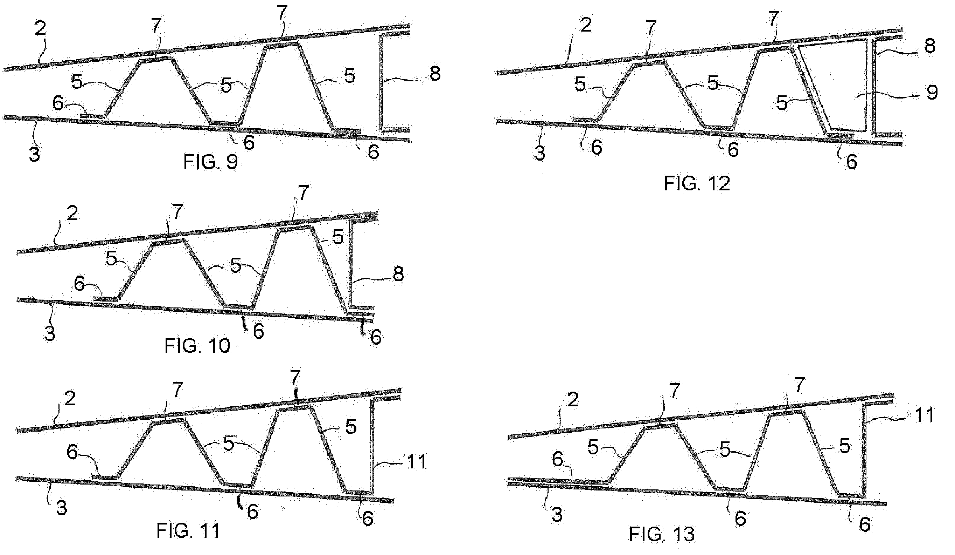

The embodiment of the invention represented in figures 11 and 13 shows a control surface 1 comprising a corrugated inner structure 4 with an integrated front spar 11, i.e., with a front spar 11 as an integral part of said inner structure 4.

Another option, which does not form part of the invention, is to introduce a not integrated front spar 8, i.e., a front spar 8 that is a separate part with respect to the inner structure 4. This configuration is represented in figures 1 to 10 and 12.

The fact of having side members 5 acting like longitudinal spars provides an a priori better bending behaviour. However, as the elevator is a structural component in which the cross section decreases from the area in touch with the torsion box to the trailing edge, the inclusion of the spar creates two thin-walled closed cells. These cross sections are very effective for torsion loads and thanks to them the need to introduce ribs as counter-fittings in the area of introduction of load may be mitigated

According to one configuration shown in figure 10, the front spar 8 is placed on the front lower member 6 of the inner structure 4. In this configuration the inner structure 4 has a greater thickness in that area, so the skins can be manufactured with less thickness.

According to one configuration shown in figure 12, the control surface 1 additionally comprises at least one rib 9 placed in the gap existing between the front spar 8 the rest of the inner structure 4, the lower skin 3 and the upper skin 2. These ribs 9 can be added if required to act as counter-fittings for the actuation zone of the control surface 1.

According to one embodiment of the invention shown in figure 13, the inner structure 4 reaches the rear end of the control surface 1, so the lower skin 3 can have less thickness.

The control surface 1 of the invention can be an elevator for a horizontal stabilizer or a rudder for a vertical stabilizer. However, the invention may also be applicable to other mobile surfaces of an aircraft, such as flaps or ailerons.

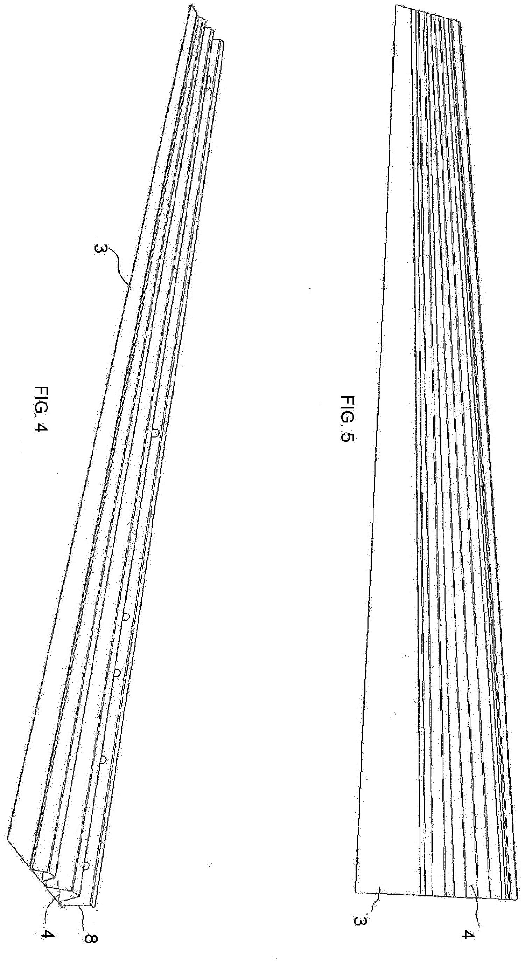

In figures 4, 7 and 8 it can be clearly seen that the height of the inner structure 4 of an elevator according to the invention decreases spanwise in an outward direction and chordwise from front to rear, according to the shape of the elevator.

The upper skin 2 and the lower skin 3 are laminated using ATL ("Automated Tape Lying") technology, and can integrate stiffeners and/or stringers (not shown) on their inner surfaces if required.

The corrugated inner structure 4 is produced using ATL and a press-forming process.

An alternative manufacturing process for the upper skin 2, the lower skin 3 and the inner structure 4 is AFP ("Automated Fibre Placement").

The respective interfaces between the upper 2 and lower 3 skins and the upper 7 and lower 6 members can be co-cured, co-bonded and/or riveted.

The method for manufacturing a control surface 1 according to the invention therefore comprises the following steps:
- The upper skin 2 and the lower skin 3 are laminated using ATL ("Automated Tape Lying") or AFP ("Automated Fibre Placement").
- The corrugated inner structure 4 is produced using ATL or AFP and a press-forming process.
- The upper skin 2, the lower skin 3 and the corrugated inner structure 4 are assembled, the lower 6 and upper 7 members of the corrugated inner structure 4 being in contact with the inner face of the lower 3 and upper 2 skins, respectively.
- The respective interfaces between the upper 2 and lower 3 skins and the upper 7 and lower 6 members are co-cured, co-bonded and/or riveted.

Although the present invention has been fully described in connection with preferred embodiments, it is evident that modifications may be introduced within the scope thereof, not considering this as limited by these embodiments, but by the contents of the following claims.

## Claims

1. Composite control surface (1) for aircraft, comprising a monolithic upper skin (2), a monolithic lower skin (3) and an inner structure (4) between them, all these elements being made of composite material, such that the inner structure (4) has a corrugated shape, comprising side members (5) acting as spars and lower (6) and upper (7) members, the lower (6) and upper (7) members contacting the inner surfaces of the lower skin (3) and the upper skin (2) respectively, **characterized in that** the inner structure (4) additionally comprises a front spar (11) as an integral part of said inner structure (4).

2. Composite control surface (1) for aircraft, according to claim 1, **characterized in that** at least one of the side members (5) is planar.

3. Composite control surface (1) for aircraft, according to claim 1 or 2, **characterized in that** at least one of the side members (5) is sloped with respect to the lower members (6).

4. Composite control surface (1) for aircraft, according to claim 1 or 2, **characterized in that** at least one of the side members (5) is vertical with respect to the lower members (6).

5. Composite control surface (1) for aircraft, according to claim 4, **characterized in that** the inner structure (4) comprises four side members (5) which are vertical with respect to the lower members (6).

6. Composite control surface (1) for aircraft, according to any of claims 1 to 5, **characterized in that** it additionally comprises at least one rib (9) placed in the gap existing between the front spar (11), the rest of the inner structure (4), the lower skin (3) and the upper skin (2).

7. Composite control surface (1) for aircraft, according to any of the previous claims, **characterized in that** the upper and lower skins (2, 3) have stiffeners and/or stringers on its inner surfaces.

8. Composite control surface (1) for aircraft, according to any of the previous claims, **characterized in that** the inner structure (4) reaches the rear end of the control surface (1).

9. Composite control surface (1) for aircraft, according to any of the previous claims, **characterized in that** the corrugated shape of the inner structure (4) includes only one omega-shaped element (10), comprising two side members (5), an upper member (7) in the interface with the upper skin (2), and two lower members (6) in the interface with the lower skin (3).

10. Composite control surface (1) for aircraft, according to any of the previous claims, the control surface (1) being an elevator for a horizontal stabilizer.

11. Composite control surface (1) for aircraft, according to claim 10, **characterized in that** the height of the inner structure (4) decreases spanwise in an outward direction and chordwise from front to rear, according to the elevator shape.

12. Composite control surface (1) for aircraft, according to any of claims 1 to 9, the control surface (1) being a rudder for a vertical stabilizer.

13. Method for manufacturing the composite control surface (1) for aircraft of claim 1, **characterized in that** it comprises the following steps:
- the upper skin (2) and the lower skin (3) are laminated using ATL ("Automated Tape Lying") or AFP ("Automated Fibre Placement"),
- the corrugated inner structure (4) is produced using ATL or AFP and a press-forming process,
- the upper skin (2), the lower skin (3) and the corrugated inner structure (4) are assembled, the lower (6) and upper (7) members of the corrugated inner structure (4) being in contact with the inner face of the lower and upper skins (3, 2), respectively, and
- the respective interfaces between the upper and lower skins (2, 3) and the upper and lower members (7, 6) are co-cured, co-bonded and/or riveted.

## Patentansprüche

1. Steuerfläche (1) aus Verbundmaterial für ein Flugzeug, mit einer monolithischen oberen Haut (2), einer monolithischen unteren Haut (3) und einer dazwischen angeordneten Innenstruktur (4), wobei all diese Elemente aus Verbundmaterial hergestellt sind, so dass die Innenstruktur (4) eine gewellte Form mit als Holmen dienenden Seitenelementen (5) und mit unteren (6) und oberen (7) Elementen aufweist, wobei die unteren (6) und die oberen (7) Elemente mit den Innenflächen der unteren Haut (3) bzw. der oberen Haut (2) in Kontakt stehen;
**dadurch gekennzeichnet, dass**
die Innenstruktur (4) außerdem einen vorderen Holm (11) als einen integralen Teil der Innenstruktur (4) aufweist.

2. Steuerfläche (1) aus Verbundmaterial nach Anspruch 1, **dadurch gekennzeichnet, dass** mindestens eines der Seitenelemente (5) eben ist.

3. Steuerfläche (1) nach Anspruch 1 oder 2, **dadurch gekennzeichnet, dass** mindestens eines der Seitenelemente (5) bezüglich den unteren Elementen (6) geneigt ist.

4. Steuerfläche (1) aus Verbundmaterial nach Anspruch 1 oder 2, **dadurch gekennzeichnet, dass** mindestens eines der Seitenelemente (5) bezüglich den unteren Elementen (6) vertikal angeordnet ist.

5. Steuerfläche (1) aus Verbundmaterial nach Anspruch 4, **dadurch gekennzeichnet, dass** die Innenstruktur (4) vier Seitenelemente (5) aufweist, die bezüglich den unteren Elementen (6) vertikal angeordnet sind.

6. Steuerfläche (1) aus Verbundmaterial nach einem der Ansprüche 1 bis 5, **dadurch gekennzeichnet, dass** die Steuerfläche zusätzlich mindestens eine Rippe (9) aufweist, die in dem zwischen dem vorderen Holm (11), dem Rest der Innenstruktur (4), der unteren Haut (3) und der oberen Haut (2) vorhandenen Zwischenraum angeordnet ist.

7. Steuerfläche (1) aus Verbundmaterial nach einem der vorangehenden Ansprüche, **dadurch gekennzeichnet, dass** die obere und die untere Haut (2, 3) Versteifungselemente und/oder Stringer auf ihren Innenflächen aufweisen.

8. Steuerfläche (1) aus Verbundmaterial nach einem der vorangehenden Ansprüche, **dadurch gekennzeichnet, dass** die Innenstruktur (4) das hintere Ende der Steuerfläche (1) erreicht.

9. Steuerfläche (1) aus Verbundmaterial nach einem der vorangehenden Ansprüche, **dadurch gekennzeichnet, dass** die gewellte Form der Innenstruktur (4) nur ein Omega-förmiges Element (10) mit zwei Seitenelementen (5), einem oberen Element (7) an der Berührungsfläche mit der oberen Haut (2) und zwei unteren Elementen (6) an der Berührungsfläche mit der unteren Haut (3) aufweist.

10. Steuerfläche (1) aus Verbundmaterial nach einem der vorangehenden Ansprüche, wobei die Steuerfläche (1) ein Höhenruder für ein Höhenleitwerk ist.

11. Steuerfläche (1) aus Verbundmaterial nach Anspruch 10, **dadurch gekennzeichnet, dass** die Höhe der Innenstruktur (4) gemäß der Höhenruderform in der Spannweitenrichtung nach außen gerichtet und in der Profilsehnenrichtung von vorne nach hinten abnimmt.

12. Steuerfläche (1) nach einem der Ansprüche 1 bis 9, wobei die Steuerfläche (1) ein Ruder eines Seitenleitwerks ist.

13. Verfahren zum Herstellen der Steuerfläche (1) aus Verbundmaterial für ein Flugzeug nach Anspruch 1, **dadurch gekennzeichnet, dass** das Verfahren die folgenden Schritte aufweist:
- die obere Haut (2) und die untere Haut (3) werden unter Verwendung eines ATL- ("Automated Tape Lying") oder eines AFP- ("Automated Fibre Placement") Verfahrens laminiert;
- die gewellte Innenstruktur (4) wird unter Verwendung eines ATL- oder eines AFP-Verfahrens und eines Pressformprozesses hergestellt;
- die obere Haut (2), die untere Haut (3) und die gewellte Innenstruktur (4) werden montiert, wobei untere (6) und obere (7) Elemente der gewellten Innenstruktur (4) mit der Innenfläche der unteren und der oberen Haut (3, 2) jeweils in Kontakt stehen; und
- die jeweiligen Berührungsflächen zwischen der oberen und der unteren Haut (2, 3) und den oberen und unteren Elementen (7, 6) werden zusammen gehärtet, zusammen verklebt und/oder vernietet.

## Revendications

1. Gouverne composite (1) pour aéronef, comprenant une peau supérieure monolithique (2), une peau inférieure monolithique (3) et une structure intérieure (4) entre elles, tous ces éléments étant réalisés en matériau composite, de sorte que la structure intérieure (4) ait une forme ondulée, comprenant des organes latéraux (5) agissant comme des longerons et des organes inférieur (6) et supérieur (7), les organes inférieur (6) et supérieur (7) entrant en contact avec les surfaces intérieures de la peau inférieure (3) et de la peau supérieure (2) respectivement, **caractérisée en ce que** la structure intérieure (4) comprend en outre un longeron avant (11) en tant que partie intégrante de ladite structure intérieure (4).

2. Gouverne composite (1) pour aéronef selon la revendication 1, **caractérisée en ce qu'**au moins l'un des organes latéraux (5) est plan.

3. Gouverne composite (1) pour aéronef selon la revendication 1 ou 2, **caractérisée en ce qu'**au moins l'un des organes latéraux (5) est incliné par rapport aux organes inférieurs (6).

4. Gouverne composite (1) pour aéronef selon la revendication 1 ou 2, **caractérisée en ce qu'**au moins l'un des organes latéraux (5) est vertical par rapport aux organes inférieurs (6).

5. Gouverne composite (1) pour aéronef selon la revendication 4, **caractérisée en ce que** la structure intérieure (4) comprend quatre organes latéraux (5) qui sont verticaux par rapport aux organes inférieurs (6).

6. Gouverne composite (1) pour aéronef selon l'une quelconque des revendications 1 à 5, **caractérisée en ce qu'**elle comprend en outre au moins une nervure (9) placée dans l'espace existant entre le longeron avant (11), le reste de la structure intérieure (4), la peau inférieure (3) et la peau supérieure (2).

7. Gouverne composite (1) pour aéronef selon l'une quelconque des revendications précédentes, **caractérisée en ce que** les peaux supérieure et inférieure (2, 3) ont des raidisseurs et/ou des lisses sur leurs surfaces intérieures.

8. Gouverne composite (1) pour aéronef selon l'une quelconque des revendications précédentes, **caractérisée en ce que** la structure intérieure (4) atteint l'extrémité arrière de la gouverne (1).

9. Gouverne composite (1) pour aéronef selon l'une quelconque des revendications précédentes, **caractérisée en ce que** la forme ondulée de la structure intérieure (4) comporte un seul élément en forme d'oméga (10), comprenant deux organes latéraux (5), un organe supérieur (7) dans l'interface avec la peau supérieure (2), et deux organes inférieurs (6) dans l'interface avec la peau inférieure (3).

10. Gouverne composite (1) pour aéronef selon l'une quelconque des revendications précédentes, la gouverne (1) étant un élévateur pour un stabilisateur horizontal.

11. Gouverne composite (1) pour aéronef selon la revendication 10, **caractérisée en ce que** la hauteur de la structure intérieure (4) décroît dans le sens de l'envergure dans une direction vers l'extérieur et dans le sens de la corde de l'avant vers l'arrière, selon la forme de l'élévateur.

12. Gouverne composite (1) pour aéronef selon l'une quelconque des revendications 1 à 9, la gouverne (1) étant une gouverne de direction pour un stabilisateur vertical.

13. Procédé de fabrication de la gouverne composite (1) pour aéronef de la revendication 1, **caractérisé en ce qu'**il comprend les étapes suivantes :
- la peau supérieure (2) et la peau inférieure (3) sont stratifiées en utilisant un ATL (« Automated Tape Lying » pour drapage de nappes) ou un AFP (« Automated Fibre Placement » pour positionnement automatique de fibres),
- la structure intérieure ondulée (4) est produite en utilisant un ATL ou un AFP et un procédé de formage à la presse,
- la peau supérieure (2), la peau inférieure (3) et la structure intérieure ondulée (4) sont assemblées, les organes inférieur (6) et supérieur (7) de la structure intérieure ondulée (4) étant en contact avec la face intérieure des peaux inférieure et supérieure (3, 2), respectivement, et
- les interfaces respectives entre les peaux supérieure et inférieure (2, 3) et les organes supérieur et inférieur (7, 6) sont co-durcies, co-liées et/ou rivetées.
